# EUROPEAN PATENT APPLICATION

(11) **EP 4 821 997 A1**
(43) Date of publication of application: **14.10.2026**
(21) Application number: 24900256.9
(22) Date of filing: 18.09.2024
(51) Int. Cl.: C09J 7/38, B32B 27/00, B32B 27/22, B32B 27/30, C08K 5/10, C08L 27/06, C08L 101/00, C09J 7/22, C09J 167/00, C09J 167/02

(54) **ADHESIVE SHEET AND LAMINATE**

(30) Priority: 07.12.2023 JP 2023207067
(71) Applicant: Soken Chemical & Engineering Co., Ltd., Toshima-ku Tokyo 171-8531 (JP)
(72) Inventor: TANAKA Ryusuke, Tokyo 171-8531 (JP); MATSUZAKI Hironori, Tokyo 171-8531 (JP); YAMADA Hiroko, Tokyo 171-8531 (JP)
(74) Representative: Dehns
(86) International application number: PCT/JP2024/033225
(87) International publication number: WO 2025/120959

(57) **Abstract**

Provided is a pressure-sensitive adhesive sheet including at least a resin layer containing a resin material and a plasticizer having an SP value of 10.0 (cal/cm³)^{1/2} or less, and a polyester-based pressure-sensitive adhesive layer.

## Description

### Technical Field

The present disclosure relates to a pressure-sensitive adhesive sheet and a laminate.

### Background Art

In various technical fields, pressure-sensitive adhesive sheets are used (see, for example, Patent Literature 1). A pressure-sensitive adhesive sheet generally includes a substrate made of a resin material such as a vinyl chloride-based resin, and a pressure-sensitive adhesive layer. When the substrate is formed from a vinyl chloride-based resin, a plasticizer is typically contained in the substrate.

### Citation List

### Patent Literature

Patent Literature 1: JP 2019-085518 A

### Summary of Invention

### Technical Problem

When a certain period of time elapses after the pressure-sensitive adhesive sheet is bonded to an adherend, the pressure-sensitive adhesive force may decrease and, for example, the pressure-sensitive adhesive sheet may be easily peeled off from the adherend. An object of the present disclosure is to provide a pressure-sensitive adhesive sheet capable of suppressing a decrease in pressure-sensitive adhesive force even after a certain period of time elapses after the sheet is bonded to an adherend.

### Solution to Problem

A pressure-sensitive adhesive sheet of a first aspect of the present disclosure includes a substrate containing a resin material and a plasticizer having an SP value of 10.0 (cal/cm³)^{1/2} or less, and a polyester-based pressure-sensitive adhesive layer.

A pressure-sensitive adhesive sheet of a second aspect of the present disclosure includes a polyester-based pressure-sensitive adhesive layer, in which the pressure-sensitive adhesive sheet is a sheet for bonding to an adherend including a portion containing a resin material and a plasticizer having an SP value of 10.0 (cal/cm³)^{1/2} or less such that the polyester-based pressure-sensitive adhesive layer of the pressure-sensitive adhesive sheet is in contact with the portion of the adherend.

### Advantageous Effects of Invention

According to the present disclosure, there is provided a pressure-sensitive adhesive sheet capable of suppressing a decrease in pressure-sensitive adhesive force even after a certain period of time elapses after the sheet is bonded to an adherend.

### Brief Description of Drawings

Fig. 1 is a schematic cross-sectional view of an embodiment of a pressure-sensitive adhesive sheet.
Fig. 2 is a schematic cross-sectional view of an embodiment of a laminate.

### Description of Embodiments

In general, the terms "sheet", "film", and "tape" may be used separately depending on, for example, the thickness, but in the present specification, these terms are used without being particularly distinguished.

In the present specification, the term "adherend" means an object to which the pressure-sensitive adhesive sheet is to be bonded.

One kind or two or more kinds of components described in the present specification can be used.

In the present specification, the numerical range n1 to n2 means n1 or more and n2 or less when n1 < n2, and means n2 or more and n1 or less when n1 > n2. In the present specification, when a plurality of lower limit values and a plurality of upper limit values are described in the description of a certain element, a numerical range obtained by combining a value arbitrarily selected from the described lower limit values and a value arbitrarily selected from the described upper limit values is also described.

### [Pressure-sensitive adhesive Sheet]

A pressure-sensitive adhesive sheet of a first aspect of the present disclosure includes:
a substrate containing a resin material and a plasticizer having an SP value of 10.0 (cal/cm³)^{1/2} or less; and
a polyester-based pressure-sensitive adhesive layer.

The substrate includes a first surface and a second surface facing the first surface.

The pressure-sensitive adhesive sheet of the first aspect may be a single-sided pressure-sensitive adhesive sheet including a polyester-based pressure-sensitive adhesive layer on either the first surface or the second surface of the substrate. The pressure-sensitive adhesive sheet of the first aspect may be a double-sided pressure-sensitive adhesive sheet including a first polyester-based pressure-sensitive adhesive layer on the first surface of the substrate and a second polyester-based pressure-sensitive adhesive layer on the second surface of the substrate, that is, the sheet may include the first polyester-based pressure-sensitive adhesive layer, the substrate, and the second polyester-based pressure-sensitive adhesive layer in this order in a laminating direction.

A pressure-sensitive adhesive sheet of a second aspect of the present disclosure includes a polyester-based pressure-sensitive adhesive layer. The pressure-sensitive adhesive sheet of the second aspect of the present disclosure is a sheet for bonding to an adherend including a portion containing a resin material and a plasticizer having an SP value of 10.0 (cal/cm³)^{1/2} or less such that the polyester-based pressure-sensitive adhesive layer of the pressure-sensitive adhesive sheet is in contact with the portion of the adherend.

The pressure-sensitive adhesive sheet of the second aspect may be a double-sided pressure-sensitive adhesive sheet without a substrate.

The pressure-sensitive adhesive sheet of the second aspect may further include a substrate containing a resin material. In an embodiment, the substrate in the pressure-sensitive adhesive sheet of the second aspect may contain a resin material and a plasticizer having an SP value of 10.0 (cal/cm³)^{1/2} or less.

The pressure-sensitive adhesive sheet of the second aspect may be a single-sided pressure-sensitive adhesive sheet including a polyester-based pressure-sensitive adhesive layer on either the first surface or the second surface of the substrate. The pressure-sensitive adhesive sheet of the second aspect may be a double-sided pressure-sensitive adhesive sheet including a first polyester-based pressure-sensitive adhesive layer on the first surface of the substrate and a second polyester-based pressure-sensitive adhesive layer on the second surface of the substrate, that is, the sheet may include the first polyester-based pressure-sensitive adhesive layer, the substrate, and the second polyester-based pressure-sensitive adhesive layer in this order in a laminating direction.

Hereinafter, when the pressure-sensitive adhesive sheet of the first aspect and the pressure-sensitive adhesive sheet of the second aspect are not particularly distinguished, or when matters common to the pressure-sensitive adhesive sheet of the first aspect and the pressure-sensitive adhesive sheet of the second aspect are described, they are simply referred to as "pressure-sensitive adhesive sheet".

The pressure-sensitive adhesive sheet of the present disclosure may include a release film on the outer side of the polyester-based pressure-sensitive adhesive layer as necessary. The release film protects the pressure-sensitive adhesive layer. The pressure-sensitive adhesive sheet may include, for example, a substrate, a polyester-based pressure-sensitive adhesive layer, and a release film in this order in the laminating direction, may include a first release film, a first polyester-based pressure-sensitive adhesive layer, a substrate, a second polyester-based pressure-sensitive adhesive layer, and a second release film in this order in the laminating direction, or may include a first release film, a polyester-based pressure-sensitive adhesive layer, and a second release film in this order in the laminating direction. When the pressure-sensitive adhesive sheet is used, for example, the release film is peeled off from the pressure-sensitive adhesive layer, and the exposed pressure-sensitive adhesive layer is bonded to a surface of an adherend.

### <Substrate>

The substrate contains a resin material. Examples of the resin material include vinyl chloride-based resins such as polyvinyl chloride and a vinyl chloride-vinyl acetate copolymer; other vinyl resins such as an ethylene-vinyl acetate copolymer, an ethylene-vinyl alcohol copolymer, and polyvinyl alcohol; polyester resins such as polyethylene terephthalate, polyethylene naphthalate, polybutylene terephthalate, and a polyethylene terephthalate/isophthalate copolymer; polyolefin resins such as polyethylene, polypropylene, and polymethylpentene; cycloolefin resin; polystyrene resin; acrylonitrile-butadiene-styrene copolymer; polyfluorinated ethylene based resins such as polyvinyl fluoride, polyvinylidene fluoride, and fluorinated polyethylene; polyamide resins such as nylon 6 and nylon 6,6; cellulose resins such as cellulose triacetate and cellophane; (meth)acrylic resins such as poly(methyl(meth)acrylate), poly(ethyl(meth)acrylate), and poly(butyl(meth)acrylate); polycarbonate resin; polyarylate resin; and polyimide resin. Among them, a polyester resin and a vinyl chloride-based resin are preferable, and polyethylene terephthalate and polyvinyl chloride are more preferable. The resin material may be a biomass material obtained using a biomass-derived raw material from the viewpoint of reducing the environmental load.

In an embodiment, the substrate in the pressure-sensitive adhesive sheet of the first aspect contains a vinyl chloride-based resin and a plasticizer having an SP value of 10.0 (cal/cm³)^{1/2} or less. Such a substrate has, for example, rigidity owing to the vinyl chloride-based resin and flexibility owing to the plasticizer.

In the present specification, the vinyl chloride-based resin is a polymer including a constituent unit derived from vinyl chloride. The content ratio of the constituent unit derived from vinyl chloride in 100 mass% of a constituent unit derived from a polymerizable monomer in the vinyl chloride-based resin is preferably 10 mass% or more, more preferably 20 mass% or more, further preferably 30 mass% or more, still more preferably 40 mass% or more, and particularly preferably 50 mass% or more. In the present specification, the content ratio of each constituent unit in the vinyl chloride-based resin is measured by a nuclear magnetic resonance (NMR) method. Examples of the vinyl chloride-based resin include a homopolymer of vinyl chloride and a copolymer of vinyl chloride and a comonomer.

Examples of the comonomer include vinylidene chloride; α-olefins such as ethylene and propylene; carboxy group-containing monomers such as (meth)acrylic acid, maleic acid, and fumaric acid, and esters or acid anhydrides thereof; vinyl ester-based monomers such as vinyl acetate and vinyl propionate; styrene-based monomers such as styrene, α-methylstyrene, and vinyltoluene; and (meth)acrylonitrile. The comonomer may be used singly or two or more kinds thereof may be used.

The substrate may contain one kind or two or more kinds of resin materials.

The content ratio of the resin material in the substrate is preferably 50 mass% or more, more preferably 60 mass% or more, and further preferably 70 mass% or more in 100 mass% of the substrate. The content ratio of the resin material in the substrate of the pressure-sensitive adhesive sheet of the first aspect is preferably 99 mass% or less, more preferably 95 mass% or less, further preferably 91 mass% or less, and particularly preferably 87 mass% or less in 100 mass% of the substrate.

The substrate may further contain an additive. Examples of the additive include an antioxidant, an ultraviolet absorber, a stabilizer, a softener, an antistatic agent, a tackifier, a plasticizer, an inorganic or organic filler, metal powder, a pigment, and a dye. The substrate may contain one kind or two or more kinds of additives. The substrate may contain a plasticizer, for example, in order to improve its flexibility. The substrate containing a vinyl chloride-based resin preferably contains a plasticizer, for example, in order to improve its flexibility.

The substrate in the pressure-sensitive adhesive sheet of the first aspect contains a plasticizer having an SP value of 10.0 (cal/cm³)^{1/2} or less. The pressure-sensitive adhesive sheet in which such a substrate is combined with a polyester-based pressure-sensitive adhesive layer can suppress a decrease in pressure-sensitive adhesive force even after a certain period of time elapses after the sheet is bonded to an adherend (for example, under a high-temperature environment). The reason for this is not clear, but the present inventors presume as follows. In the prior art, for example, a plasticizer may be blended in the substrate in order to improve the flexibility of the substrate. The plasticizer contained in the substrate may migrate into the pressure-sensitive adhesive layer, and it is considered that the migration reduces the pressure-sensitive adhesive force of the pressure-sensitive adhesive layer. The plasticizer having an SP value of 10.0 (cal/cm³)^{1/2} or less has low compatibility with the polyester resin as shown in the section of Examples described later. It is presumed that since the compatibility between the plasticizer having an SP value of 10.0 (cal/cm³)^{1/2} or less contained in the substrate and the polyester resin contained in the pressure-sensitive adhesive layer is low, migration of the plasticizer from the substrate into the pressure-sensitive adhesive layer is suppressed, and thus a decrease in pressure-sensitive adhesive force of the pressure-sensitive adhesive layer due to the plasticizer is suppressed.

In the present specification, the SP value of the plasticizer is a solubility parameter calculated by the Fedors' method. Specifically, the SP value of the plasticizer is a value (unit: (cal/cm³)^{1/2}) calculated by Formula (28) described on page 153 using the numerical values (heat of vaporization and molar volume of atoms or functional groups at 25°C) described on page 152 (Table 5) of Polymer Engineering and Science, February, 1974, Vol. 14, No. 2, P 147 to 154 describing the Fedors' method.

Examples of the plasticizer having an SP value of 10.0 (cal/cm³)^{1/2} or less include phthalic acid esters such as diisononyl phthalate, di-2-ethylhexyl phthalate, diheptyl phthalate, dioctyl phthalate, and diisodecyl phthalate; adipic acid esters such as dimethyl adipate, diisobutyl adipate, di-2-ethylhexyl adipate, diisononyl adipate, and diisodecyl adipate; sebacic acid esters such as dibutyl sebacate and di-2-ethylhexyl sebacate; azelaic acid esters such as di-2-ethylhexyl azelate; and trimellitic acid esters such as tri-2-ethylhexyl trimellitate; having an SP value of 10.0 (cal/cm³)^{1/2} or less. The plasticizer is preferably a mono-, di- or triester of a di- or tricarboxylic acid, such as phthalic acid, adipic acid, sebacic acid, azelaic acid or trimellitic acid, and an alcohol. Examples of the alcohol include linear or branched alkyl alcohols having 1 to 10 carbon atoms such as methyl alcohol, n-butyl alcohol, isobutyl alcohol, n-heptyl alcohol, n-octyl alcohol, 2-ethylhexyl alcohol, isononyl alcohol, and isodecyl alcohol.

The SP value (unit: (cal/cm³)^{1/2}) of the plasticizer is 10.0 or less, preferably 9.8 or less, more preferably 9.6 or less, and further preferably 9.5 or less, and preferably 8.0 or more, more preferably 8.5 or more, and further preferably 9.0 or more, and is, for example, 8.0 to 10.0.

The molecular weight of the plasticizer having an SP value of 10.0 (cal/cm³)^{1/2} or less is preferably 700 or less, more preferably 600 or less, and further preferably 500 or less. The plasticizer having such a molecular weight tends to be more excellent in plasticizing effect as compared with a so-called polymer plasticizer.

The substrate in the pressure-sensitive adhesive sheet of the first aspect contains at least one plasticizer having an SP value of 10.0 (cal/cm³)^{1/2} or less, and may contain two or more plasticizers having an SP value of 10.0 (cal/cm³)^{1/2} or less. The substrate in the pressure-sensitive adhesive sheet of the first aspect only needs to contain a plasticizer having an SP value of 10.0 (cal/cm³)^{1/2} or less, and may further contain a plasticizer having an SP value of more than 10.0 (cal/cm³)^{1/2}. It is preferable that the substrate in the pressure-sensitive adhesive sheet of the first aspect does not contain a plasticizer having an SP value of more than 10.0 (cal/cm³)^{1/2}, from the viewpoint of suppressing the migration of the plasticizer to the polyester-based pressure-sensitive adhesive layer.

In the substrate of the pressure-sensitive adhesive sheet of the first aspect, the content of the plasticizer having an SP value of 10.0 (cal/cm³)^{1/2} or less is preferably 1 part by mass or more, more preferably 5 parts by mass or more, further preferably 10 parts by mass or more, and particularly preferably 15 parts by mass or more, and preferably 50 parts by mass or less, more preferably 45 parts by mass or less, further preferably 40 parts by mass or less, and particularly preferably 35 parts by mass or less with respect to 100 parts by mass of the resin material contained in the substrate, and is, for example, 1 to 50 parts by mass.

In the substrate of the pressure-sensitive adhesive sheet of the first aspect, the content ratio of the plasticizer having an SP value of 10.0 (cal/cm³)^{1/2} or less is preferably 70 mass% or more, more preferably 80 mass% or more, further preferably 90 mass% or more, and particularly preferably 95 mass% or more in 100 mass% of the entire plasticizer contained in the substrate, from the viewpoint of suppressing the migration of the plasticizer to the polyester-based pressure-sensitive adhesive layer.

When the pressure-sensitive adhesive sheet of the second aspect includes a substrate, the substrate may contain a plasticizer having an SP value of 10.0 (cal/cm³)^{1/2} or less. The substrate may be the same substrate as the substrate in the pressure-sensitive adhesive sheet of the first aspect.

The substrate may have a single-layer structure or a multilayer structure of two or more layers.

The surface of the substrate on which the polyester-based pressure-sensitive adhesive layer is provided may be subjected to surface treatment from the viewpoint of improving adhesion between the substrate and the polyester-based pressure-sensitive adhesive layer. Examples of the surface treatment include oxidation treatment by a chemical or physical method such as corona treatment, chromic acid treatment, ozone exposure, flame exposure, high-voltage electric shock exposure, and ionizing radiation treatment.

The thickness of the substrate is not particularly limited, and is preferably 1 to 1,000 µm, more preferably 5 to 500 µm, further preferably 10 to 300 µm, and still more preferably 20 to 200 µm.

### <Polyester-Based Pressure-sensitive adhesive Layer>

The polyester-based pressure-sensitive adhesive layer is, for example, a layer formed from a pressure-sensitive adhesive composition containing a polyester resin. The pressure-sensitive adhesive composition may contain one kind or two or more kinds of polyester resins. Details of the polyester resin will be described later.

The content ratio of the polyester resin in the solid content of the pressure-sensitive adhesive composition is preferably 50 mass% or more, more preferably 60 mass% or more, further preferably 70 mass% or more, still more preferably 80 mass% or more, and particularly preferably 90 mass% or more.

The pressure-sensitive adhesive composition may further contain an additive. Examples of the additive include a crosslinking agent, an antioxidant, an ultraviolet absorber, a stabilizer, a softener, an antistatic agent, a tackifier, a plasticizer, an inorganic or organic filler, metal powder, a pigment, and a dye. The pressure-sensitive adhesive composition may contain one kind or two or more kinds of additives.

When the pressure-sensitive adhesive composition contains an additive, the content of the additive is preferably 50 parts by mass or less, more preferably 40 parts by mass or less, and further preferably 30 parts by mass or less with respect to 100 parts by mass of the polyester resin.

The pressure-sensitive adhesive composition may further contain a crosslinking agent. Examples of the crosslinking agent include an isocyanate-based crosslinking agent. The isocyanate-based crosslinking agent is a compound having two or more isocyanate groups in one molecule. The number of isocyanate groups in one molecule of the isocyanate-based crosslinking agent is preferably 2 to 8, and more preferably 2 to 6. Examples of the isocyanate-based crosslinking agent include a diisocyanate compound having two isocyanate groups in one molecule, and an isocyanate compound having three or more isocyanate groups in one molecule.

Examples of the diisocyanate compound include an aliphatic diisocyanate, an alicyclic diisocyanate, and an aromatic diisocyanate. Examples of the aliphatic diisocyanates include aliphatic diisocyanates having 4 to 30 carbon atoms such as ethylene diisocyanate, tetramethylene diisocyanate, pentamethylene diisocyanate, hexamethylene diisocyanate, 2-methyl-1,5-pentane diisocyanate, 3-methyl-1,5-pentane diisocyanate, and 2,2,4-trimethyl-1,6-hexamethylene diisocyanate. Examples of the alicyclic diisocyanates include alicyclic diisocyanates having 7 to 30 carbon atoms such as isophorone diisocyanate, cyclopentyl diisocyanate, cyclohexyl diisocyanate, hydrogenated xylylene diisocyanate, hydrogenated tolylene diisocyanate, hydrogenated diphenylmethane diisocyanate, and hydrogenated tetramethylxylene diisocyanate. Examples of the aromatic diisocyanates include aromatic diisocyanates having 8 to 30 carbon atoms such as phenylene diisocyanate, tolylene diisocyanate, xylylene diisocyanate, naphthylene diisocyanate, diphenyl ether diisocyanate, diphenylmethane diisocyanate, and diphenylpropane diisocyanate.

Examples of the isocyanate compound having three or more isocyanate groups in one molecule include aromatic polyisocyanates, aliphatic polyisocyanates, and alicyclic polyisocyanates, and specific examples thereof include 2,4,6-triisocyanate toluene, 1,3,5-triisocyanate benzene, and 4,4',4"-triphenylmethane triisocyanate.

Examples of the isocyanate-based crosslinking agent include: a multimer (e.g., a dimer or trimer, a biuret, or an isocyanurate), a derivative (e.g., an addition reaction product of a polyhydric alcohol with two or more molecules of a diisocyanate compound), and a polymer of the isocyanate compound having two or three or more isocyanate groups. Examples of the polyhydric alcohol in the derivative include, as low-molecular-weight polyhydric alcohols, trihydric or higher alcohols such as trimethylolpropane, glycerin, and pentaerythritol, and, as high-molecular-weight polyhydric alcohols, polyether polyol, polyester polyol, acryl polyol, polybutadiene polyol, and polyisoprene polyol. Examples of such an isocyanate-based crosslinking agent include a trimer of diphenylmethane diisocyanate, a biuret or isocyanurate of polymethylene polyphenyl polyisocyanate, hexamethylene diisocyanate or tolylene diisocyanate, a reaction product of trimethylolpropane with tolylene diisocyanate or xylylene diisocyanate (for example, a trimolecular adduct of tolylene diisocyanate or xylylene diisocyanate), a reaction product of trimethylolpropane with hexamethylene diisocyanate (for example, a trimolecular adduct of hexamethylene diisocyanate), polyether polyisocyanate, and polyester polyisocyanate.

When the pressure-sensitive adhesive composition contains a crosslinking agent, the content of the crosslinking agent is not particularly limited, and is preferably 0.05 to 10 parts by mass, and more preferably 0.1 to 5 parts by mass with respect to 100 parts by mass of the polyester resin.

The thickness of the polyester-based pressure-sensitive adhesive layer is not particularly limited, and is preferably 1 to 500 µm, more preferably 3 to 200 µm, further preferably 5 to 100 µm, and still more preferably 10 to 50 µm. Such a polyester-based pressure-sensitive adhesive layer tends to have excellent pressure-sensitive adhesiveness to an adherend. When the pressure-sensitive adhesive sheet includes the first polyester-based pressure-sensitive adhesive layer and the second polyester-based pressure-sensitive adhesive layer, the thickness means the thickness of each of the first and second polyester-based pressure-sensitive adhesive layers.

### <<Polyester Resin>>

The polyester resin is, for example, a polycondensate of a monomer mixture containing a dicarboxylic acid component and a diol component. The polyester resin is obtained, for example, by polycondensation of the monomer mixture. The polyester resin includes a constituent unit derived from a dicarboxylic acid component and a constituent unit derived from a diol component.

The glass transition temperature (Tg) of the polyester resin is preferably 10°C or lower, more preferably -60 to 5°C, and further preferably -50 to 0°C. When the Tg is the upper limit value or less, the pressure-sensitive adhesive layer tends to be excellent in pressure-sensitive adhesiveness and flexibility. When the Tg is the lower limit value or more, the polyester resin tends to be excellent in cohesive force. The Tg of the polyester resin is a value as measured using a differential scanning calorimeter (DSC), the temperature raising rate is 10°C/min, and the details of measurement conditions are described in the section of Examples.

The weight average molecular weight (Mw) of the polyester resin is preferably 8,000 to 200,000, more preferably 15,000 to 150,000, and further preferably 20,000 to 100,000. When the Mw is the lower limit value or more, the polyester resin tends to be excellent in cohesive force as a pressure-sensitive adhesive and excellent in heat resistance and mechanical strength. When the Mw is the upper limit value or less, gelation tends to be suppressed during production of the polyester resin. The Mw is a value in terms of polystyrene as determined by gel permeation chromatography (GPC method), and the details of measurement conditions are described in the section of Examples.

The acid value of the polyester resin is preferably 10 mgKOH/g or less, more preferably 3 mgKOH/g or less, and further preferably 1 mgKOH/g or less. When the acid value is the upper limit value or less, the hydrolysis of the polyester resin can be suppressed. The acid value is a value as determined by a neutralization titration method in accordance with JIS K 0070:1992.

### (Dicarboxylic Acid Component)

As a raw material monomer of the polyester resin, a dicarboxylic acid component is used.

In the present specification, the term "dicarboxylic acid component" is used in the sense of encompassing a dicarboxylic acid and a dicarboxylic acid derivative. That is, the term "dicarboxylic acid component" is used in the sense that it may be a dicarboxylic acid, a dicarboxylic acid derivative, or a mixture of a dicarboxylic acid and a dicarboxylic acid derivative. Examples of the dicarboxylic acid derivative include dicarboxylic acid esters such as dicarboxylic acid alkyl ester, dicarboxylic acid anhydride, dicarboxylic acid salts such as a sodium salt and a potassium salt, and dicarboxylic acid halides such as dicarboxylic acid chloride. The number of carbon atoms of the alkyl group in the dicarboxylic acid alkyl ester is preferably 1 to 15, more preferably 1 to 10, and further preferably 1 to 5. The dicarboxylic acid ester may be a dicarboxylic acid monoester or a dicarboxylic acid diester. The dicarboxylic acid alkyl ester may be a dicarboxylic acid monoalkyl ester or a dicarboxylic acid dialkyl ester. The dicarboxylic acid salt may be a mono- or di-salt of dicarboxylic acid. The dicarboxylic acid halide may be a mono- or dihalide of dicarboxylic acid.

In the production of the polyester resin, the dicarboxylic acid component may be used singly or two or more kinds thereof may be used. The polyester resin may include one kind or two or more kinds of constituent units derived from the dicarboxylic acid components. The dicarboxylic acid component may be a biomass component obtained using a biomass-derived raw material from the viewpoint of reducing the environmental load.

Examples of the dicarboxylic acid component include aliphatic dicarboxylic acid and a derivative thereof, alicyclic dicarboxylic acid and a derivative thereof, and aromatic dicarboxylic acid and a derivative thereof.

Examples of the aliphatic dicarboxylic acid include malonic acid, succinic acid, glutaric acid, 3,3-dimethylglutaric acid, adipic acid, 2,2,4-trimethyladipic acid, pimelic acid, azelaic acid, sebacic acid, fumaric acid, maleic acid, itaconic acid, diglycolic acid, and 1,9-nonanedicarboxylic acid.

Examples of the alicyclic dicarboxylic acid include 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and adamantane dicarboxylic acid.

Examples of the aromatic dicarboxylic acid include phthalic acid, isophthalic acid, terephthalic acid, benzylmalonic acid, diphenic acid, 4,4'-oxydibenzoic acid, 2,5-furandicarboxylic acid, naphthalenedicarboxylic acid (e.g.: 1,8-naphthalenedicarboxylic acid, 2,3-naphthalenedicarboxylic acid, or 2,7-naphthalenedicarboxylic acid), and sulfonate group-containing aromatic dicarboxylic acid.

The dicarboxylic acid component used for production of the polyester resin preferably contains at least an aromatic dicarboxylic acid component. When the polyester resin of such an aspect is used, the pressure-sensitive adhesive sheet to be obtained can further suppress a decrease in pressure-sensitive adhesive force after a lapse of a certain period of time, and tends to be further excellent in holding force described later. From the viewpoint that a polyester resin having low compatibility with a plasticizer having an SP value of 10.0 (cal/cm³)^{1/2} or less is obtained, a decrease in pressure-sensitive adhesive force after a lapse of a certain period of time can be further suppressed, and holding force described later is further excellent, in the monomer mixture, the ratio of the aromatic dicarboxylic acid component is preferably 20 mol% or more, more preferably 30 mol% or more, further preferably 40 mol% or more, still more preferably 50 mol% or more, especially preferably 60 mol% or more, and particularly preferably 70 mol% or more, and preferably 100 mol% or less, more preferably 99 mol% or less, further preferably 95 mol% or less, and particularly preferably 90 mol% in 100 mol% of the dicarboxylic acid component, and is, for example, 20 to 100 mol%.

In the polyester resin, the content ratio of the constituent unit derived from the aromatic dicarboxylic acid component is preferably 20 mol% or more, more preferably 30 mol% or more, further preferably 40 mol% or more, still more preferably 50 mol% or more, especially preferably 60 mol% or more, and particularly preferably 70 mol% or more, and preferably 100 mol% or less, more preferably 99 mol% or less, further preferably 95 mol% or less, and particularly preferably 90 mol% in 100 mol% of the constituent unit derived from the dicarboxylic acid component, and is, for example, 20 to 100 mol%. In the present specification, the content ratio of the constituent unit derived from each component in the polyester resin is measured by a nuclear magnetic resonance (NMR) method.

The dicarboxylic acid component used for production of the polyester resin preferably contains at least a sulfonate group-containing dicarboxylic acid component. The polyester resin of such an aspect has a high cohesive force, and the pressure-sensitive adhesive sheet to be obtained tends to be further excellent in holding force described later. Examples of the sulfonate group-containing dicarboxylic acid component include sulfonate group-containing dicarboxylic acid and a derivative thereof. Examples of the derivative include monoor diesters of dicarboxylic acids, carboxylic anhydrides, mono- or disalts of dicarboxylic acids, and mono- or dihalides of dicarboxylic acids.

The sulfonate group-containing dicarboxylic acid has two carboxy groups and a sulfonate group in the molecule. Examples of the sulfonate group include a metal salt, an ammonium salt, and an organic amine salt of a sulfonic acid group (-SO₃H). Examples of the metal atom forming the metal salt include monovalent metal atoms such as alkali metal atoms such as lithium, sodium, and potassium; and divalent metal atoms such as calcium and magnesium. Examples of the organic amine salt include alkanolamine salts such as an ethanolamine salt, a diethanolamine salt, and a triethanolamine salt; and a triethylamine salt. As the sulfonate group, for example, a sodium sulfonate salt group, a potassium sulfonate salt group, a magnesium sulfonate salt group, a calcium sulfonate salt group, and an ammonium sulfonate salt group are preferable, and a sodium sulfonate salt group is particularly preferable.

As the sulfonate group-containing dicarboxylic acid component, a sulfonate group-containing aromatic dicarboxylic acid component is preferable, an aromatic dicarboxylic acid component having a sulfonate group bonded to a benzene ring is more preferable, and phthalic acid, isophthalic acid, or terephthalic acid having a sulfonate group bonded to a benzene ring is further preferable.

Examples of the sulfonate group-containing dicarboxylic acid component include sodium 5-sulfoisophthalate, dimethyl sodium 5-sulfoisophthalate, dimethyl potassium 5-sulfoisophthalate, sodium 4-sulfoisophthalate, dimethyl sodium 4-sulfoisophthalate, dimethyl potassium 4-sulfoisophthalate, sodium 2-sulfoterephthalate, potassium 2-sulfoterephthalate, dimethyl sodium 2-sulfoterephthalate, and dimethyl potassium 2-sulfoterephthalate. Among them, dimethyl sodium 5-sulfoisophthalate is preferable.

In the monomer mixture, the ratio of the sulfonate group-containing dicarboxylic acid component is preferably 1 to 10 mol%, more preferably 2 to 8 mol%, and further preferably 3 to 7 mol% in 100 mol% of the dicarboxylic acid component used for production of the polyester resin.

In the polyester resin, the content ratio of the constituent unit derived from the sulfonate group-containing dicarboxylic acid component is preferably 1 to 10 mol%, more preferably 2 to 8 mol%, and further preferably 3 to 7 mol% in 100 mol% of the constituent unit derived from the dicarboxylic acid component.

As the raw material monomer of the polyester resin, a trivalent or higher polycarboxylic acid component may be further used together with the dicarboxylic acid component. Examples of the trivalent or higher polycarboxylic acid component include a trivalent or higher polycarboxylic acid and a derivative thereof. Examples of the trivalent or higher polycarboxylic acid include trimellitic acid, pyromellitic acid, adamantane tricarboxylic acid, and trimesic acid. By using a trivalent or higher polycarboxylic acid component, for example, a branching point can be introduced into the polyester resin.

In the monomer mixture, the amount of the trivalent or higher polycarboxylic acid component is preferably 20 mol or less, more preferably 10 mol or less, further preferably 5 mol or less, and particularly preferably 1 mol or less with respect to 100 mol of the dicarboxylic acid component, from the viewpoint of ease of production of the polyester resin.

In the polyester resin, the content of the constituent unit derived from the trivalent or higher polycarboxylic acid component is preferably 20 mol or less, more preferably 10 mol or less, further preferably 5 mol or less, and particularly preferably 1 mol or less with respect to 100 mol of the constituent unit derived from the dicarboxylic acid component, from the viewpoint of ease of production of the polyester resin.

### (Diol Component)

As the raw material monomer of the polyester resin, a diol component (hereinafter, also simply referred to as "diol") is used. In the production of the polyester resin, the diol may be used singly or two or more kinds thereof may be used. The polyester resin may include one kind or two or more kinds of constituent units derived from the diols. The diol may be a biomass component obtained using a biomass-derived raw material from the viewpoint of reducing the environmental load.

The diol has two hydroxy groups. Examples of the diol include an aliphatic diol, an alicyclic diol, and an aromatic diol. Other examples of the diol component include fatty acid esters derived from castor oil, dimer diols derived from oleic acid or erucic acid, and glycerol monostearate.

Examples of the aliphatic diol include linear diols such as ethylene glycol, 1,3-propanediol, 1,4-butanediol, 1,5-pentanediol, 1,6-hexanediol, 1,9-nonanediol, 1,10-decanediol, 1,12-dodecanediol, diethylene glycol, and triethylene glycol; diols with branches such as propylene glycol, dipropylene glycol, 2-methyl-1,3-propanediol, 2,2-dimethyl-1,3-propanediol, 2,2-diethyl-1,3-propanediol, 2-methyl-2-ethyl-1,3-propanediol, 2-methyl-2-propyl-1,3-propanediol, 2-ethyl-2-butyl-1,3-propanediol, 2-butyl-2-ethyl-1,3-propanediol, 2-methyl-2,4-pentanediol, 3-methyl-1,5-pentanediol, 2,4-diethyl-1,5-pentanediol, 1,3,5-trimethyl-1,3-pentanediol, 2-methyl-1,6-hexanediol, 2,2,4-trimethyl-1,6-hexanediol, and 2,4-dimethyl-2-ethyl-1,3-hexanediol; and ethylene oxide adducts or propylene oxide adducts to these diols.

Examples of the alicyclic diol include 1,2-cyclohexanedimethanol, 1,3-cyclohexanedimethanol, 1,4-cyclohexanedimethanol, spiroglycol, tricyclodecanedimethanol, adamantanediol, and 2,2,4,4-tetramethyl-1,3-cyclobutanediol; and ethylene oxide adducts or propylene oxide adducts to these diols.

Examples of the aromatic diol include dihydroxybenzene, naphthalene diol, xylene diol, 4,4'-methylene diphenol, and 4,4'-dihydroxybiphenyl; and ethylene oxide adducts or propylene oxide adducts to these diols.

Among the diols, an aliphatic diol is preferable, an aliphatic diol having 2 to 20 carbon atoms is more preferable, and an aliphatic diol having 2 to 10 carbon atoms is further preferable, from the viewpoint of reactivity in the production of the polyester resin.

In the monomer mixture, the ratio of the aliphatic diol is preferably 50 mol% or more, more preferably 60 mol% or more, further preferably 70 mol% or more, still more preferably 80 mol% or more, and particularly preferably 90 mol% or more in 100 mol% of the diol used for production of the polyester resin, from the viewpoint of ease of production of the polyester resin.

In the polyester resin, the content ratio of the constituent unit derived from the aliphatic diol is preferably 50 mol% or more, more preferably 60 mol% or more, further preferably 70 mol% or more, still more preferably 80 mol% or more, and particularly preferably 90 mol% or more in 100 mol% of the constituent unit derived from the diol, from the viewpoint of ease of production of the polyester resin.

As the raw material monomer of the polyester resin, a trivalent or higher polyol may be further used together with the diol. The trivalent or higher polyol has three or more hydroxy groups. Examples of the trivalent or higher polyol include pentaerythritol, dipentaerythritol, tripentaerythritol, glycerin, trimethylolpropane, trimethylolethane, 1,3,6-hexanetriol, and adamantanetriol.

In the monomer mixture, the amount of the trivalent or higher polyol is preferably 20 mol or less, more preferably 10 mol or less, further preferably 5 mol or less, and particularly preferably 1 mol or less with respect to 100 mol of the diol, from the viewpoint of ease of production of the polyester resin.

In the polyester resin, the content of the constituent unit derived from the trivalent or higher polyol is preferably 20 mol or less, more preferably 10 mol or less, further preferably 5 mol or less, and particularly preferably 1 mol or less with respect to 100 mol of the constituent unit derived from the diol component, from the viewpoint of ease of production of the polyester resin.

### (Production of Polyester Resin)

The polyester resin can be produced, for example, by subjecting a dicarboxylic acid component and a diol component to a polycondensation reaction by a known method in the presence of a catalyst as necessary. In an embodiment, after an esterification reaction is performed, a polycondensation reaction is performed.

As the blending ratio of the dicarboxylic acid component and the diol component in the production of the polyester resin, the amount of the diol component is preferably 1 to 3 mol, and more preferably 1.1 to 2.5 mol with respect to 1 mol of the dicarboxylic acid component.

In the esterification reaction, a catalyst may be used. Examples of the catalyst include titanium-based catalysts such as titanium tetraisopropoxide and titanium tetrabutoxide; antimony-based catalysts such as antimony trioxide; germanium-based catalysts such as germanium dioxide; and catalysts such as zinc acetate, manganese acetate, and dibutyltin oxide. The catalyst may be used singly or two or more kinds thereof may be used. The amount of the catalyst used is preferably 1.0×10⁻⁷ to 1.0×10⁻³ mol, more preferably 5.0×10⁻⁷ to 0.5×10⁻³ mol, and further preferably 1.0×10⁻⁶ to 1.0×10⁻⁴ mol with respect to the total 1 mol of the raw material monomers contained in the monomer mixture.

The reaction temperature in the esterification reaction is preferably 150 to 280°C, more preferably 160 to 260°C, and further preferably 170 to 240°C.

In the polycondensation reaction, a catalyst may be used. Examples of the catalyst include the catalysts exemplified in the description of the esterification reaction. The reaction temperature in the polycondensation reaction is preferably 200 to 300°C, and more preferably 220 to 280°C. In the polycondensation reaction, the reaction system may be gradually depressurized and the reaction may be finally performed at 500 Pa or less.

### <Release Film>

Examples of the release film include a film obtained by subjecting a resin film formed from the resin material exemplified as a component constituting the substrate to a release treatment; foams such as polyurethane foam, vinyl foam, polyethylene foam, and polystyrene foam; metal foils such as aluminum foil, copper foil, stainless steel foil, iron foil, duralumin foil, tin foil, titanium foil, and gold foil; paper; woven fabric; and nonwoven fabric.

Examples of the release treatment include a treatment of applying a release agent in the form of a layer. Examples of the release agent include a silicone-based resin, a longchain alkyl-based resin, a fluorine-based resin, and a phosphoric acid ester-based surfactant. The release agent may be used singly or two or more kinds thereof may be used.

The thickness of the release film is not particularly limited, and is preferably 1 to 1,000 µm, more preferably 5 to 500 µm, further preferably 10 to 300 µm, and still more preferably 20 to 200 µm. When the pressure-sensitive adhesive sheet includes the first release film and the second release film, the thickness means the thickness of each of the first and second release films.

### <Object (Adherend) to Which Pressure-sensitive adhesive Sheet of Second Aspect Is to Be Bonded>

The pressure-sensitive adhesive sheet of the second aspect is to be bonded to an adherend including a portion containing a resin material and a plasticizer having an SP value of 10.0 (cal/cm³)^{1/2} or less. Hereinafter, the adherend to which the pressure-sensitive adhesive sheet of the second aspect is to be bonded will be described.

The portion of the adherend contains a resin material. Examples of the resin material include vinyl chloride-based resins such as polyvinyl chloride and a vinyl chloride-vinyl acetate copolymer; other vinyl resins such as an ethylene-vinyl acetate copolymer, an ethylene-vinyl alcohol copolymer, and polyvinyl alcohol; polyester resins such as polyethylene terephthalate, polyethylene naphthalate, polybutylene terephthalate, and a polyethylene terephthalate/isophthalate copolymer; polyolefin resins such as polyethylene, polypropylene, and polymethylpentene; cycloolefin resin; polystyrene resin; acrylonitrile-butadiene-styrene copolymer; polyfluorinated ethylene based resins such as polyvinyl fluoride, polyvinylidene fluoride, and fluorinated polyethylene; polyamide resins such as nylon 6 and nylon 6,6; cellulose resins such as cellulose triacetate and cellophane; (meth)acrylic resins such as poly(methyl(meth)acrylate), poly(ethyl(meth)acrylate), and poly(butyl(meth)acrylate); polycarbonate resin; polyarylate resin; and polyimide resin. Among them, a polyester resin and a vinyl chloride-based resin are preferable, and polyethylene terephthalate and polyvinyl chloride are more preferable. The resin material may be a biomass material obtained using a biomass-derived raw material from the viewpoint of reducing the environmental load.

In an embodiment, the portion of the adherend contains a vinyl chloride-based resin and a plasticizer having an SP value of 10.0 (cal/cm³)^{1/2} or less. The adherend including such a portion has, for example, rigidity owing to the vinyl chloride-based resin and flexibility owing to the plasticizer.

The portion of the adherend may contain one kind or two or more kinds of resin materials.

The content ratio of the resin material in the portion of the adherend is preferably 50 mass% or more, more preferably 60 mass% or more, and further preferably 70 mass% or more, and preferably 99 mass% or less, more preferably 95 mass% or less, further preferably 91 mass% or less, and particularly preferably 87 mass% or less in 100 mass% of the portion, and is, for example, 50 to 99 mass%.

The portion of the adherend may further contain an additive. Examples of the additive include an antioxidant, an ultraviolet absorber, a stabilizer, a softener, an antistatic agent, a tackifier, a plasticizer, an inorganic or organic filler, metal powder, a pigment, and a dye. The portion of the adherend may contain one kind or two or more kinds of additives. The portion of the adherend may contain a plasticizer, for example, in order to improve its flexibility. The portion containing a vinyl chloride-based resin preferably contains a plasticizer, for example, in order to improve its flexibility.

The polyester-based pressure-sensitive adhesive layer in the pressure-sensitive adhesive sheet of the second aspect is a layer formed from a pressure-sensitive adhesive composition containing a polyester resin, and the portion of the adherend contains a plasticizer having an SP value of 10.0 (cal/cm³)^{1/2} or less. Such a pressure-sensitive adhesive sheet can suppress a decrease in pressure-sensitive adhesive force even after a certain period of time elapses after the sheet is bonded to an adherend (for example, under a high-temperature environment). The reason for this is not clear, but the present inventors presume as follows. In the prior art, for example, a plasticizer may be blended in the portion of the adherend in order to improve the flexibility of the portion. The plasticizer contained in the adherend may migrate into the pressure-sensitive adhesive layer, and it is considered that the migration reduces the pressure-sensitive adhesive force of the pressure-sensitive adhesive layer. The plasticizer having an SP value of 10.0 (cal/cm³)^{1/2} or less has low compatibility with the polyester resin as shown in the section of Examples described later. It is presumed that since the compatibility between the plasticizer having an SP value of 10.0 (cal/cm³)^{1/2} or less contained in the adherend and the polyester resin contained in the pressure-sensitive adhesive layer is low, migration of the plasticizer from the adherend into the pressure-sensitive adhesive layer is suppressed, and thus a decrease in pressure-sensitive adhesive force of the pressure-sensitive adhesive layer due to the plasticizer is suppressed.

The details (for example, specific examples, SP value, and molecular weight) of the plasticizer having an SP value of 10.0 (cal/cm³)^{1/2} or less are as described above, and the description thereof in this section is omitted.

The portion in the adherend for the pressure-sensitive adhesive sheet of the second aspect contains at least one plasticizer having an SP value of 10.0 (cal/cm³)^{1/2} or less, and may contain two or more plasticizers having an SP value of 10.0 (cal/cm³)^{1/2} or less. The portion in the adherend for the pressure-sensitive adhesive sheet of the second aspect only needs to contain a plasticizer having an SP value of 10.0 (cal/cm³)^{1/2} or less, and may further contain a plasticizer having an SP value of more than 10.0 (cal/cm³)^{1/2}. It is preferable that the portion in the adherend for the pressure-sensitive adhesive sheet of the second aspect does not contain a plasticizer having an SP value of more than 10.0 (cal/cm³)^{1/2}, from the viewpoint of suppressing the migration of the plasticizer to the polyester-based pressure-sensitive adhesive layer.

In the portion of the adherend, the content of the plasticizer having an SP value of 10.0 (cal/cm³)^{1/2} or less is preferably 1 part by mass or more, more preferably 5 parts by mass or more, further preferably 10 parts by mass or more, and particularly preferably 15 parts by mass or more, and preferably 50 parts by mass or less, more preferably 45 parts by mass or less, further preferably 40 parts by mass or less, and particularly preferably 35 parts by mass or less with respect to 100 parts by mass of the resin material contained in the portion, and is, for example, 1 to 50 parts by mass.

In the portion of the adherend, the content ratio of the plasticizer having an SP value of 10.0 (cal/cm³)^{1/2} or less is preferably 70 mass% or more, more preferably 80 mass% or more, further preferably 90 mass% or more, and particularly preferably 95 mass% or more in 100 mass% of the entire plasticizer contained in the portion, from the viewpoint of suppressing the migration of the plasticizer to the polyester-based pressure-sensitive adhesive layer.

### <Production of Pressure-sensitive adhesive Sheet>

The pressure-sensitive adhesive sheet of the present disclosure can be produced, for example, by a conventionally known method.

For example, the pressure-sensitive adhesive sheet can be produced as follows. A pressure-sensitive adhesive composition containing a polyester resin is provided. The pressure-sensitive adhesive composition is applied to the first surface or the second surface of the substrate and dried to form a pressure-sensitive adhesive layer, a release film is bonded to the surface of the pressure-sensitive adhesive layer, and a curing treatment is performed as necessary. Alternatively, the pressure-sensitive adhesive composition is applied to the surface of the release film and dried to form a pressure-sensitive adhesive layer, the substrate is bonded to the surface of the pressure-sensitive adhesive layer, and a curing treatment is performed as necessary. In this way, a pressure-sensitive adhesive sheet including a substrate, a pressure-sensitive adhesive layer, and a release film is obtained.

For example, the pressure-sensitive adhesive sheet can be produced as follows. A pressure-sensitive adhesive composition containing a polyester resin is provided. The pressure-sensitive adhesive composition is applied to the surface of the release film and dried to form a pressure-sensitive adhesive layer, another release film is bonded to the surface of the pressure-sensitive adhesive layer, and a curing treatment is performed as necessary. In this way, a double-sided pressure-sensitive adhesive sheet without a substrate is obtained.

The pressure-sensitive adhesive composition may contain a solvent or a dispersion medium. Examples of the solvent or dispersion medium include an organic solvent (organic dispersion medium) and water. The form of the pressure-sensitive adhesive composition may be, for example, a solution containing a polyester resin and a solvent or a dispersion liquid containing a polyester resin and a dispersion medium.

Examples of the organic solvent (organic dispersion medium) include aromatic hydrocarbons such as benzene, toluene, and xylene; aliphatic hydrocarbons such as n-pentane, n-hexane, n-heptane, and n-octane; alicyclic hydrocarbons such as cyclopentane, cyclohexane, cycloheptane, and cyclooctane; ethers such as diethyl ether, diisopropyl ether, 1,2-dimethoxyethane, dibutyl ether, tetrahydrofuran, dioxane, anisole, phenylethyl ether, and diphenyl ether; halogenated hydrocarbons such as chloroform, carbon tetrachloride, 1,2-dichloroethane, and chlorobenzene; esters such as ethyl acetate, propyl acetate, butyl acetate, and methyl propionate; ketones such as acetone, methyl ethyl ketone, diethyl ketone, methyl isobutyl ketone, and cyclohexanone; amides such as N,N-dimethylformamide, N,N-dimethylacetamide, and N-methylpyrrolidone; nitriles such as acetonitrile and benzonitrile; and sulfoxides such as dimethyl sulfoxide and sulfolane.

Examples of the water include tap water, deionized water, and ion-exchanged water.

The pressure-sensitive adhesive composition may contain one kind or two or more kinds of solvents or dispersion media.

The content ratio of the solvent or the dispersion medium in the pressure-sensitive adhesive composition is preferably 10 to 90 mass%, more preferably 15 to 80 mass%, and further preferably 20 to 70 mass%.

Examples of the method of applying the pressure-sensitive adhesive composition include a spin coating method, a knife coating method, a roll coating method, a bar coating method, a blade coating method, a die coating method, and a gravure coating method.

As drying conditions after applying the pressure-sensitive adhesive composition, the drying temperature is preferably 50 to 150°C, and more preferably 60 to 120°C, and the drying time is preferably 1 to 10 minutes, more preferably 2 to 7 minutes. As conditions for the curing treatment, the curing temperature is preferably 5 to 60°C, and more preferably 15 to 40°C, and the curing time is preferably 1 to 30 days, more preferably 3 to 20 days.

### <Use Application of Pressure-sensitive adhesive Sheet>

The pressure-sensitive adhesive sheet of the present disclosure can be used for various purposes. The material of the portion of the adherend to which the pressure-sensitive adhesive sheet of the first aspect is to be bonded is not particularly limited. The portion of the adherend to which the pressure-sensitive adhesive sheet of the second aspect is to be bonded contains a resin material and a plasticizer having an SP value of 10.0 (cal/cm³)^{1/2} or less.

The pressure-sensitive adhesive sheet of the present disclosure can be used, for example, as a marking film intended for display or decoration. Examples of the adherend to which the marking film is to be bonded include vehicles such as bicycles, motorcycles, automobiles, buses, and trains; household products such as furniture and home electric appliances; office supplies such as cabinets, office desks, and personal computers; buildings such as houses; daily necessities such as cell phones and cell phone covers; and exterior or interior parts thereof. Examples of the material of the adherend include plastic, glass, and metals such as stainless steel and aluminum.

The pressure-sensitive adhesive sheet of the present disclosure can be used, for example, as a surface protective sheet. Examples of the use application of the surface protective sheet include a protective sheet for a plastic film or a glass plate, a protective sheet for an optical member, a protective sheet for a semiconductor wafer, a protective sheet for an electronic component or an electronic device such as an electronic substrate, and a protective sheet for a metal plate such as stainless steel or aluminum. Therefore, examples of the adherend to which the surface protective sheet is to be bonded include plastic films, glass plates, optical members, semiconductor wafers, electronic components and electronic devices such as electronic substrates, and metal plates such as stainless steel and aluminum.

Examples of the optical member include an inorganic transparent electrode film such as an ITO electrode film, an organic transparent electrode film such as polythiophene, a polarizing plate, a retardation plate, an elliptically polarizing plate, a light diffusion film, an optical compensation film, a brightness enhancement film, an electromagnetic wave shield film, a near-infrared absorption film, an antireflection film, and an anti-glare film.

When the pressure-sensitive adhesive sheet of the present disclosure further includes an optical member, the pressure-sensitive adhesive sheet can be used as, for example, an optical sheet. The pressure-sensitive adhesive sheet of the present disclosure can also be used as a pressure-sensitive adhesive sheet for an optical member used for bonding the optical member.

As the adherend for the pressure-sensitive adhesive sheet of the second aspect, for example, members for vehicles such as automobiles, buses, and trains, members for aircraft, members for ships, and members for buildings are preferable, and interior materials for vehicles, interior materials for aircraft, interior materials for ships, and interior materials for buildings are more preferable. The pressure-sensitive adhesive sheet of the second aspect is bonded to, for example, the interior material.

### [Laminate]

A laminate of the present disclosure includes, in the stated order in a laminating direction:
a first resin layer;
a polyester-based pressure-sensitive adhesive layer; and
a second resin layer.

At least one layer selected from the first resin layer and the second resin layer is a layer containing a resin material and a plasticizer having an SP value of 10.0 (cal/cm³)^{1/2} or less (hereinafter, also referred to as "layer (A)"). In an embodiment, the layer (A) contains a vinyl chloride-based resin and a plasticizer having an SP value of 10.0 (cal/cm³)^{1/2} or less. The details of the resin material, the plasticizer having an SP value of 10.0 (cal/cm³)^{1/2} or less, and the polyester-based pressure-sensitive adhesive layer are as described above, and the description thereof in this section is omitted.

The content ratio of the resin material in the layer (A) is preferably 50 mass% or more, more preferably 60 mass% or more, and further preferably 70 mass% or more, and preferably 99 mass% or less, more preferably 95 mass% or less, further preferably 91 mass% or less, and particularly preferably 87 mass% or less in 100 mass% of the layer (A), and is, for example, 50 to 99 mass%.

The layer (A) may further contain the above-described additive.

In the layer (A), the content of the plasticizer having an SP value of 10.0 (cal/cm³)^{1/2} or less is preferably 1 part by mass or more, more preferably 5 parts by mass or more, further preferably 10 parts by mass or more, and particularly preferably 15 parts by mass or more, and preferably 50 parts by mass or less, more preferably 45 parts by mass or less, further preferably 40 parts by mass or less, and particularly preferably 35 parts by mass or less with respect to 100 parts by mass of the resin material contained in the layer (A), and is, for example, 1 to 50 parts by mass.

In the layer (A), the content ratio of the plasticizer having an SP value of 10.0 (cal/cm³)^{1/2} or less is preferably 70 mass% or more, more preferably 80 mass% or more, further preferably 90 mass% or more, and particularly preferably 95 mass% or more in 100 mass% of the entire plasticizer contained in the layer (A), from the viewpoint of suppressing the migration of the plasticizer to the polyester-based pressure-sensitive adhesive layer.

In an embodiment of the laminate, the first resin layer is in contact with one surface of the polyester-based pressure-sensitive adhesive layer, and the second resin layer is in contact with the other surface of the polyester-based pressure-sensitive adhesive layer.

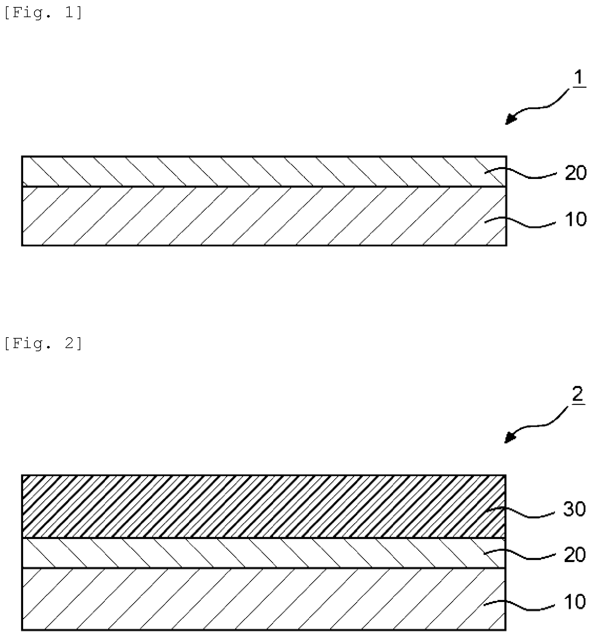

In an embodiment of the laminate, one of the first resin layer and the second resin layer is a substrate of the above-described pressure-sensitive adhesive sheet, and the other is a portion, which is in contact with the pressure-sensitive adhesive layer, of the adherend to which the above-described pressure-sensitive adhesive sheet is bonded. A pressure-sensitive adhesive sheet 1 illustrated in Fig. 1 includes a substrate 10 and a polyester-based pressure-sensitive adhesive layer 20. A laminate 2 illustrated in Fig. 2 includes a substrate 10, a polyester-based pressure-sensitive adhesive layer 20, and an adherend 30 in this order.

For example, one of the first resin layer and the second resin layer is a substrate containing a resin material and a plasticizer having an SP value of 10.0 (cal/cm³)^{1/2} or less in the pressure-sensitive adhesive sheet of the first aspect described above, and the other is a portion, which is in contact with the pressure-sensitive adhesive layer, of the adherend to which the above-described pressure-sensitive adhesive sheet is bonded.

For example, one of the first resin layer and the second resin layer is a substrate in the pressure-sensitive adhesive sheet of the second aspect described above, and the other is a portion, which contains a resin material and a plasticizer having an SP value of 10.0 (cal/cm³)^{1/2} or less, of the adherend to which the pressure-sensitive adhesive sheet is bonded.

### [Aspect Examples]

The present disclosure relates to, for example, the following [1] to [11].
[1] A pressure-sensitive adhesive sheet including: a substrate containing a resin material and a plasticizer having an SP value of 10.0 (cal/cm³)^{1/2} or less; and a polyester-based pressure-sensitive adhesive layer.
[2] The pressure-sensitive adhesive sheet according to [1], wherein the substrate contains at least a vinyl chloride-based resin as the resin material.
[3] A pressure-sensitive adhesive sheet including a polyester-based pressure-sensitive adhesive layer, wherein the pressure-sensitive adhesive sheet is a sheet for bonding to an adherend including a portion containing a resin material and a plasticizer having an SP value of 10.0 (cal/cm³)^{1/2} or less such that the polyester-based pressure-sensitive adhesive layer of the pressure-sensitive adhesive sheet is in contact with the portion of the adherend.
[4] The pressure-sensitive adhesive sheet according to [3], wherein the portion of the adherend contains at least a vinyl chloride-based resin as the resin material.
[5] The pressure-sensitive adhesive sheet according to any one of [1] to [4], wherein the polyester-based pressure-sensitive adhesive layer is a layer formed from a pressure-sensitive adhesive composition containing a polyester resin having a glass transition temperature of 10°C or lower.
[6] The pressure-sensitive adhesive sheet according to any one of [1] to [5], wherein the SP value of the plasticizer is 8.0 to 9.6 (cal/cm³)^{1/2}.
[7] The pressure-sensitive adhesive sheet according to any one of [1] to [6], wherein the polyester-based pressure-sensitive adhesive layer is a layer formed from a pressure-sensitive adhesive composition containing a polyester resin that is a polycondensate of a monomer mixture containing a dicarboxylic acid component and a diol component, and the polyester resin includes 50 to 100 mol% of a constituent unit derived from an aromatic dicarboxylic acid component in 100 mol% of a constituent unit derived from the dicarboxylic acid component.
[8] The pressure-sensitive adhesive sheet according to [7], wherein the polyester resin includes 1 to 10 mol% of a constituent unit derived from a sulfonate group-containing dicarboxylic acid component in 100 mol% of the constituent unit derived from the dicarboxylic acid component.
[9] The pressure-sensitive adhesive sheet according to any one of [1] to [8], wherein the plasticizer is at least one selected from phthalic acid ester, adipic acid ester, sebacic acid ester, azelaic acid ester, and trimellitic acid ester, and is a compound having an SP value of 10.0 (cal/cm³)^{1/2} or less.
[10] A laminate including, in the stated order in a laminating direction: a first resin layer; a polyester-based pressure-sensitive adhesive layer; and a second resin layer, wherein at least one layer selected from the first resin layer and the second resin layer contains a resin material and a plasticizer having an SP value of 10.0 (cal/cm³)^{1/2} or less.
[11] The laminate according to [10], wherein at least one layer selected from the first resin layer and the second resin layer contains at least a vinyl chloride-based resin as the resin material, and the SP value of the plasticizer is 8.0 to 9.6 (cal/cm³)^{1/2}.

### Examples

Hereinafter, the pressure-sensitive adhesive sheet of the present disclosure will be described more specifically on the basis of production examples; however, the pressure-sensitive adhesive sheet of the present disclosure is not limited to these production examples at all.

### [Methods of Measuring Various Physical Properties]

### <Content of Constituent Unit of Polyester Resin>

The content ratio (constituent unit amount) of the constituent unit derived from each raw material monomer in the polyester resin is calculated by a nuclear magnetic resonance (NMR) method under the following conditions.
· Measuring apparatus: ECZL-500G (manufactured by JEOL Ltd.)
· Measurement method: ¹H-NMR
· Number of integrations: 16
· Sample concentration: 10 mg/ml
· Dilution solvent: dimethyl sulfoxide (DMSO)-d₆

### <Glass Transition Temperature (Tg) of Polyester Resin>

The polyester resin was sealed in a simple sealing pan, and measurement was performed using a differential scanning calorimeter (DSC). In the measurement, the temperature was raised from -60°C to 200°C at 10°C/min under a nitrogen stream, a thermal change was measured, a DSC curve of "endothermic and exothermic amount" and "temperature" was drawn, and a temperature at a characteristic inflection point observed at this time was defined as Tg. Note that, as the Tg, a value obtained from the DSC curve by a midpoint method was used.

### <Weight Average Molecular Weight (Mw) of Polyester Resin>

The weight average molecular weight (Mw) of the polyester resin in terms of polystyrene was determined by gel permeation chromatography (GPC method) under the following conditions.
· Measuring apparatus: HLC-8320GPC (manufactured by Tosoh Corporation)
· GPC column configuration: following 4 columns (all manufactured by Tosoh Corporation)
   (1) TSKgel HxL-H (guard column)
   (2) TSKgel GMHxL
   (3) TSKgel GMHxL
   (4) TSKgel G2500HxL
· Flow rate: 1.0 mL/min
· Column temperature: 40°C
· Sample concentration: 1.5% (w/v) (diluted with tetrahydrofuran)
· Mobile phase solvent: tetrahydrofuran
· Standard polystyrene conversion

### <Compatibility>

The polyester resin obtained in the following Production Examples was provided. As the plasticizer, di-2-ethylhexyl phthalate (DOP) having an SP value of 9.5 (cal/cm³)^{1/2} and diethyl phthalate (DEP) having an SP value of 10.5 (cal/cm³)^{1/2} were provided. 100 parts by mass of the polyester resin and 20 parts by mass of DOP were dissolved in tetrahydrofuran (THF) to prepare a solution having a solid content concentration of 30 mass%. Similarly, 100 parts by mass of the polyester resin and 20 parts by mass of DEP were dissolved in THF to prepare a solution having a solid content concentration of 30 mass%. Each of the obtained solutions was applied to a polyethylene terephthalate (PET) film having a thickness of 50 µm so that the thickness after drying was 20 µm, and dried in an environment at 100°C for 2 minutes to remove the solvent, thereby forming a pressure-sensitive adhesive layer. The pressure-sensitive adhesive layer after removal of the solvent was visually checked and evaluated according to the following criteria.
A: Turbidity or bleeding-out is observed in the pressure-sensitive adhesive layer. This indicates that compatibility between the polyester resin and the plasticizer is low. In this case, it is considered that the migration of the plasticizer from the layer containing the plasticizer into the polyester-based pressure-sensitive adhesive layer can be favorably suppressed.
B: Slight turbidity is observed in the pressure-sensitive adhesive layer.
C: No turbidity is observed in the pressure-sensitive adhesive layer, and no bleeding-out is observed. This indicates that compatibility between the polyester resin and the plasticizer is high. In this case, it is considered that the migration of the plasticizer from the layer containing the plasticizer into the polyester-based pressure-sensitive adhesive layer cannot be sufficiently suppressed.

### [Production Example A1]

In a flask equipped with a heating device, a thermometer, a stirrer, a fractionating column, a nitrogen introducing tube, and a vacuum device, 0.75 mol of isophthalic acid (IPA), 0.2 mol of sebacic acid (SebA), 0.05 mol of dimethyl sodium 5-sulfoisophthalate (SIPM), 2 mol of diethylene glycol (DEG), and 0.000035 mol of ORGATIX TA-8 (titanium tetraisopropoxide, manufactured by Matsumoto Fine Chemical Co., Ltd.) as a polymerization catalyst were charged, the temperature in the flask was gradually increased to 200°C while introducing nitrogen, and an esterification reaction was performed for 3 hours. Thereafter, the temperature in the flask was raised to 250°C and the pressure was reduced to 100 Pa, and a polycondensation reaction was performed for 3 hours. In this way, a polyester resin (1) was obtained. The glass transition temperature of the polyester resin (1) was -5°C, and the weight average molecular weight was 40,000.

### [Production Examples A2 to A5]

Polyester resins (2) to (5) were produced in the same manner as in Production Example A1 except that the charged amount of the raw material monomers was changed as shown in Table 1.

**Table 1**

| | | | Production Example A1 | Production Example A2 | Production Example A3 |
|---|---|---|---|---|---|
| | | | Polyester resin (1) | Polyester resin (2) | Polyester resin (3) |
| | Raw material monomer charged amount (mol) | IPA | 0.75 | 0.75 | 0.45 |
| | | SebA | 0.2 | 0.2 | 0.5 |
| | | SIPM | 0.05 | 0.05 | 0.05 |
| | | DEG | 2 | | 2 |
| Resin composition | | MPD | | 2 | |
| | Constituent unit amount (mol%)*1 | IPA | 75 | 75 | 45 |
| | | SebA | 20 | 20 | 50 |
| | | SIPM | 5 | 5 | 5 |
| | Constituent unit amount (mol%)*2 | DEG | 100 | | 100 |
| | | MPD | | 100 | |
| Resin property | Tg(°C) | | -5 | -19 | -23 |
| | Mw | | 40000 | 40000 | 45000 |
| Compatibility | DOP (SP value 9.5) | | A | B | B |
| | DEP (SP value 10.5) | | C | C | C |

| | | | | Production Example A4 | Production Example A5 |
|---|---|---|---|---|---|
| | | | | Polyester resin (4) | Polyester resin (5) |
| | Raw material monomer charged amount (mol) | IPA | | 0.2 | 0.75 |
| | | SebA | | 0.75 | 0.25 |
| | | SIPM | | 0.05 | |
| | | DEG | | 2 | 2 |
| Resin composition | | MPD | | | |
| | Constituent unit amount (mol%)*1 | IPA | | 20 | 75 |
| | | SebA | | 75 | 25 |
| | | SIPM | | 5 | |
| | Constituent unit amount (mol%)*2 | DEG | | 100 | 100 |
| | | MPD | | | |
| Resin property | Tg(°C) | | | -45 | -7 |
| | Mw | | | 40000 | 42000 |
| Compatibility | DOP (SP value 9.5) | | | B | A |
| | DEP (SP value 10.5) | | | C | C |

| | | | | | |
|---|---|---|---|---|---|
| *1: Content ratio of constituent unit derived from each dicarboxylic acid component in total amount of constituent units derived from dicarboxylic acid components *2: Content ratio of constituent unit derived from each diol in total amount of constituent units derived from diols | | | | | |

IPA: isophthalic acid
SebA: sebacic acid
SIPM: dimethyl sodium 5-sulfoisophthalate
DEG: diethylene glycol
MPD: 3-methyl-1,5-pentanediol
DOP: di-2-ethylhexyl phthalate
DEP: diethyl phthalate

### [Production Example B1]

The polyester resin (1) and THF were charged in a sample bottle to prepare a solution in which the solid content concentration of the polyester resin (1) was 30 mass%. The obtained solution was applied to a PET film having a thickness of 50 µm so that the thickness after drying was 20 µm, and dried in an environment at 100°C for 2 minutes to remove the solvent, thereby forming a pressure-sensitive adhesive layer. A release-treated PET film was bonded to a surface of the pressure-sensitive adhesive layer on a side opposite to a surface in contact with the PET film. In this way, a pressure-sensitive adhesive sheet including a PET film having a thickness of 50 µm, a pressure-sensitive adhesive layer having a thickness of 20 µm, and a release-treated PET film was obtained.

### [Production Examples B2 to B5]

Pressure-sensitive adhesive sheets were produced in the same manner as in Production Example B1 except that the polyester resin (1) was changed to any one of the polyester resins (2) to (5) shown in Table 2.

### [Evaluation]

### <Pressure-sensitive adhesive Force>

Polyvinyl chloride (PVC) and di-2-ethylhexyl phthalate (DOP) having an SP value of 9.5 (cal/cm³)^{1/2} as a plasticizer were mixed, and the resulting mixture was then calendered at 170°C to produce a polyvinyl chloride resin film (hereinafter, also referred to as "polyvinyl chloride resin film (1)") containing 23 mass% of DOP.

A polyvinyl chloride resin film (hereinafter, also referred to as "polyvinyl chloride resin film (2)") was produced in the same manner as described above except that diethyl phthalate (DEP) having an SP value of 10.5 (cal/cm³)^{1/2} was used as the plasticizer.

The pressure-sensitive adhesive sheet was cut into a size of 20 mm × 100 mm, and then the release-treated PET film was peeled off from the pressure-sensitive adhesive layer. The exposed pressure-sensitive adhesive layer was bonded to the polyvinyl chloride resin film (1) or (2), and a pressure bonding treatment in which a 2 kg roller was reciprocated three times was performed, thereby preparing a test piece. Two test pieces were prepared in each test. One test piece was left to stand in an environment at 23°C and 50% RH for 20 minutes (described as "Initial" in Table 2), the other test piece was left to stand in an environment at 60°C for 24 hours (described as "After 60°C × 24 hr" in Table 2), the end of the pressure-sensitive adhesive sheet was pulled at a rate of 300 mm/min in a 180° direction with respect to the surface of the polyvinyl chloride resin film, and the pressure-sensitive adhesive force was measured. A larger ratio of the pressure-sensitive adhesive force after 60°C × 24 hr to the initial pressure-sensitive adhesive force indicates that the pressure-sensitive adhesive force is less likely to decrease.

### <Holding Force>

Under the conditions of 23°C and 50% RH, the release-treated PET film in the pressure-sensitive adhesive sheet was peeled off, the exposed pressure-sensitive adhesive layer was bonded to an SUS plate, and a pressure bonding treatment in which a 2 kg roller was reciprocated three times was performed. The bonded area was set to 25 mm × 25 mm. After a lapse of 20 minutes from the bonding, a load of 500 g was applied in a direction parallel to the surface of the pressure-sensitive adhesive layer at 40°C under dry conditions, and the distance (mm) of displacement of the pressure-sensitive adhesive sheet after 1 hour from the original position was measured. The smaller the displacement distance of the pressure-sensitive adhesive sheet, the higher the holding force of the pressure-sensitive adhesive sheet.

**Table 2**

| | | Production Example B1 | Production Example B2 | Production Example B3 | Production Example B4 | Production Example B5 |
|---|---|---|---|---|---|---|
| Polyester resin | | (1) | (2) | (3) | (4) | (5) |
| Pressure-sensitive adhesive force to PVC (containing DOP) [N/20 mm] | a: Initial | 19.3 | 38.9 | 29.2 | 32.6 | 17.9 |
| | b: After 60°C × 24 hr | 16.4 | 32.6 | 18.9 | 17.8 | 15.5 |
| | b/a[%] | 85 | 84 | 65 | 55 | 87 |
| Pressure-sensitive adhesive force to PVC (containing DEP) [N/20 mm] | a: Initial | 18.9 | 35.6 | 27.7 | 30.7 | 16.6 |
| | b: After 60°C × 24 hr | 12.3 | 20.5 | 13.5 | 15.2 | 11.3 |
| | b/a[%] | 65 | 58 | 49 | 50 | 68 |
| Displacement distance at 40°C [mm] | | 0.10 | 0.15 | 0.20 | 0.35 | 0.15 |

### Reference Signs List

- 1: Pressure-sensitive adhesive sheet
- 2: Laminate
- 10: Substrate
- 20: Polyester-based pressure-sensitive adhesive layer
- 30: Adherend

## Claims

1. A pressure-sensitive adhesive sheet comprising:
a substrate containing a resin material and a plasticizer having an SP value of 10.0 (cal/cm³)^{1/2} or less; and
a polyester-based pressure-sensitive adhesive layer.

2. The pressure-sensitive adhesive sheet according to claim 1, wherein the substrate contains at least a vinyl chloride-based resin as the resin material.

3. A pressure-sensitive adhesive sheet comprising a polyester-based pressure-sensitive adhesive layer, wherein
the pressure-sensitive adhesive sheet is a sheet for bonding to an adherend including a portion containing a resin material and a plasticizer having an SP value of 10.0 (cal/cm³)^{1/2} or less such that the polyester-based pressure-sensitive adhesive layer of the pressure-sensitive adhesive sheet is in contact with the portion of the adherend.

4. The pressure-sensitive adhesive sheet according to claim 3, wherein the portion of the adherend contains at least a vinyl chloride-based resin as the resin material.

5. The pressure-sensitive adhesive sheet according to any one of claims 1 to 4, wherein the polyester-based pressure-sensitive adhesive layer is a layer formed from a pressure-sensitive adhesive composition containing a polyester resin having a glass transition temperature of 10°C or lower.

6. The pressure-sensitive adhesive sheet according to any one of claims 1 to 4, wherein the SP value of the plasticizer is 8.0 to 9.6 (cal/cm³)^{1/2}.

7. The pressure-sensitive adhesive sheet according to any one of claims 1 to 4, wherein
the polyester-based pressure-sensitive adhesive layer is a layer formed from a pressure-sensitive adhesive composition containing a polyester resin that is a polycondensate of a monomer mixture containing a dicarboxylic acid component and a diol component, and
the polyester resin includes 50 to 100 mol% of a constituent unit derived from an aromatic dicarboxylic acid component in 100 mol% of a constituent unit derived from the dicarboxylic acid component.

8. The pressure-sensitive adhesive sheet according to claim 7, wherein the polyester resin includes 1 to 10 mol% of a constituent unit derived from a sulfonate group-containing dicarboxylic acid component in 100 mol% of the constituent unit derived from the dicarboxylic acid component.

9. The pressure-sensitive adhesive sheet according to claim 1 or 3, wherein the plasticizer is at least one selected from phthalic acid ester, adipic acid ester, sebacic acid ester, azelaic acid ester, and trimellitic acid ester, and is a compound having an SP value of 10.0 (cal/cm³)^{1/2} or less.

10. A laminate comprising, in the stated order in a laminating direction:
a first resin layer;
a polyester-based pressure-sensitive adhesive layer; and
a second resin layer, wherein
at least one layer selected from the first resin layer and the second resin layer contains a resin material and a plasticizer having an SP value of 10.0 (cal/cm³)^{1/2} or less.

11. The laminate according to claim 10, wherein
at least one layer selected from the first resin layer and the second resin layer contains at least a vinyl chloride-based resin as the resin material, and
the SP value of the plasticizer is 8.0 to 9.6 (cal/cm³)^{1/2}.
